# EUROPEAN PATENT APPLICATION

(11) **EP 3 539 751 A1**
(43) Date of publication of application: **18.09.2019**
(21) Application number: 19160163.2
(22) Date of filing: 01.03.2019
(51) Int. Cl.: B29C 64/118, B29C 64/40

(54) **FABRICATING APPARATUS AND FABRICATION METHOD**

(30) Priority: 12.03.2018 JP 2018044480
(71) Applicant: Ricoh Company, Ltd., Tokyo 143-8555 (JP)
(72) Inventor: SUGAWARA, Wataru, Tokyo, 143-8555 (JP); ITO, Yoichi, Tokyo, 143-8555 (JP); TAKAI, Atsushi, Tokyo, 143-8555 (JP); ARAO, Tsuyoshi, Tokyo, 143-8555 (JP); AKIEDA, Tomomi, Tokyo, 143-8555 (JP)
(74) Representative: SSM Sandmair

(57) **Abstract**

A fabricating apparatus (1) includes a discharger (10) and a cooler (12). The discharger (10) discharges a melted fabrication material and forms a fabrication material layer including a model portion (M) and a support portion (S). The cooler (12) cools the fabrication material layer.

## Description

### BACKGROUND

### Technical Field

The present invention relates to a fabricating apparatus and a fabrication method.

### Related Art

Three-dimensional printers have been widely used as an apparatus which can produce many types of fabrication objects in small quantities without using molds and the like. A price of a three-dimensional printer using the fused filament fabrication (hereinafter, abbreviated as "FFF") has been lowered in recent years, and the three-dimensional printers have penetrated into consumers. To prevent deterioration in strength of a three-dimensional fabrication object in a lamination direction, a technique for roughening a surface of a layer and laminating layers has been known.

JP-2017-170648-A discloses a technique for forming a support portion supporting the three-dimensional fabrication object with a material including a model material and a support material. According to Patent Literature 1, it is possible to easily remove the support portion while preventing deterioration in the strength of the support portion.

However, in JP-2017-170648-A, since the model portion and the support portion are bonded to each other, easiness of an operation for removing a support material has not been sufficient.

### SUMMARY

In an aspect of the present disclosure, there is provided a fabricating apparatus that includes a discharger and a cooler. The discharger discharges a melted fabrication material and forms a fabrication material layer including a model portion and a support portion. The cooler cools the fabrication material layer.

In another aspect of the present disclosure, there is provided a fabrication method including discharging a melted fabrication material and forming a model portion, cooling the model portion, and discharging a fabrication material and forming a support portion.

According to the present invention, an effect is obtained such that a fabricated support portion is easily removed while maintaining a strength of a fabrication object.

### BRIEF DESCRIPTION OF THE DRAWINGS

The aforementioned and other aspects, features, and advantages of the present disclosure would be better understood by reference to the following detailed description when considered in connection with the accompanying drawings, wherein:
FIG. 1 is a schematic diagram of a configuration of a three-dimensional fabricating apparatus according to an embodiment;
FIG. 2 is a schematic view of a cross section of a discharge module of the three-dimensional fabricating apparatus in FIG. 1;
FIG. 3 is a hardware configuration diagram of the three-dimensional fabricating apparatus according to an embodiment;
FIG. 4 is a schematic diagram of an example of an operation for heating a lower layer;
FIG. 5 is a plan view of a heating module according to an embodiment as viewed from a side of a fabrication table;
FIGS. 6A to 6C are schematic diagrams of states of a fabrication object at the time of forming an upper layer;
FIGS. 7A to 7C are schematic diagrams of states of the fabrication object at the time of forming the upper layer;
FIGS. 8A to 8C are schematic diagrams of states of the fabrication object at the time of forming the upper layer;
FIGS. 9A to 9C are schematic diagrams of states of the fabrication object at the time of forming the upper layer;
FIG. 10 is a schematic diagram of an example of a reheating range according to the present embodiment;
FIG. 11 is a flowchart of fabrication processing according to an embodiment;
FIG. 12 is a schematic diagram of an operation for heating the lower layer according to an embodiment;
FIG. 13 is a schematic diagram of the operation for heating the lower layer according to an embodiment;
FIG. 14 is a schematic diagram of the operation for heating the lower layer according to an embodiment;
FIG. 15 is a schematic diagram of the operation for heating the lower layer according to an embodiment;
FIGS. 16A and 16B are cross-sectional views of an example of a filament in which a material composition is unevenly distributed;
FIGS. 17A and 17B are cross-sectional views of a discharged object of the filament in FIGS. 16A and 16B;
FIG. 18 is a cross-sectional view of a fabrication object fabricated by using the filament in FIGS. 16A and 16B;
FIG. 19 is a schematic diagram of an example of a three-dimensional fabricating apparatus including a restricting device;
FIG. 20 is a flowchart of an example of processing for restricting a direction of the filament;
FIG. 21 is a schematic diagram of a fabrication and surface treatment operation according to an embodiment;
FIG. 22 is a schematic diagram of a cooling operation according to an embodiment; and
FIG. 23 is a flowchart of fabrication processing according to an embodiment.

The accompanying drawings are intended to depict embodiments of the present disclosure and should not be interpreted to limit the scope thereof. The accompanying drawings are not to be considered as drawn to scale unless explicitly noted.

### DETAILED DESCRIPTION

In describing embodiments illustrated in the drawings, specific terminology is employed for the sake of clarity. However, the disclosure of this patent specification is not intended to be limited to the specific terminology so selected and it is to be understood that each specific element includes all technical equivalents that operate in a similar manner and achieve similar results.

Although the embodiments are described with technical limitations with reference to the attached drawings, such description is not intended to limit the scope of the disclosure and all of the components or elements described in the embodiments of this disclosure are not necessarily indispensable.

Referring now to the drawings, embodiments of the present disclosure are described below. In the drawings for explaining the following embodiments, the same reference codes are allocated to elements (members or components) having the same function or shape and redundant descriptions thereof are omitted below.

Hereinafter, embodiments of the present invention will be described with reference to the drawings.

### <<<General Arrangement>>>

As an embodiment of the present invention, a three-dimensional fabricating apparatus which fabricates a three-dimensional fabrication object by the Fused Filament Fabrication (FFF) will be described. The three-dimensional fabricating apparatus according to the present embodiment is not limited to an apparatus using the Fused Filament Fabrication (FFF) and may be an apparatus using an arbitrary fabrication method for fabricating a three-dimensional fabrication object on a placing surface of a placing table by a fabricating device.

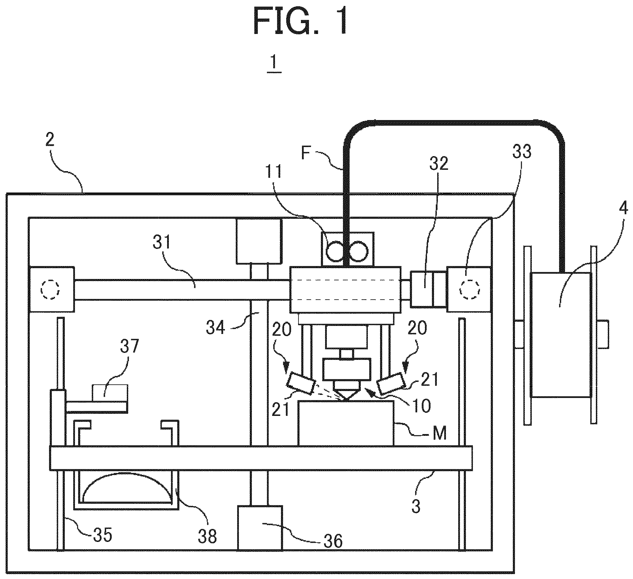

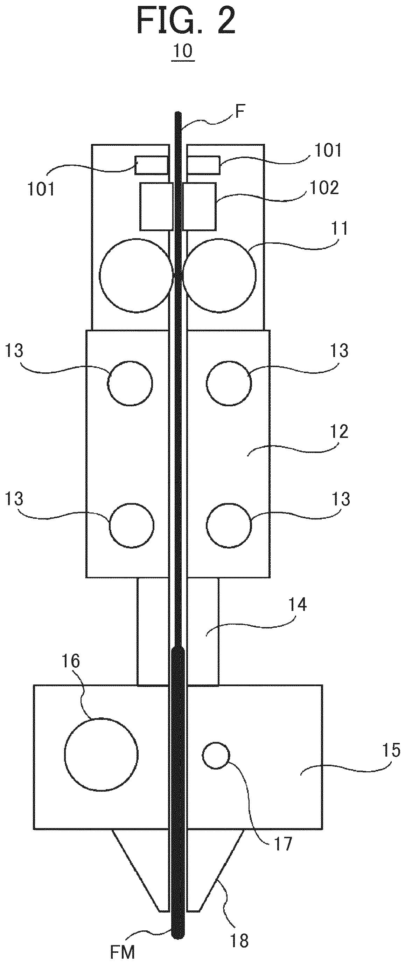

FIG. 1 is a schematic diagram of a configuration of a three-dimensional fabricating apparatus according to an embodiment. FIG. 2 is a schematic view of a cross section of a discharge module of the three-dimensional fabricating apparatus in FIG. 1. A three-dimensional fabricating apparatus 1 can fabricate a three-dimensional fabrication object of which a mold is complicated or which cannot be molded in injection molding.

An interior of a casing 2 of the three-dimensional fabricating apparatus 1 is a processing space for fabricating a three-dimensional fabrication object M. A fabrication table 3 as a placing table is provided in the casing 2, and the three-dimensional fabrication object M is fabricated on the fabrication table 3.

For fabrication, a long filament F including a resin composition in which thermoplastic resin is formed in a matrix is used. The filament F is an elongated wire-shaped solid material and is set on a reel 4 outside the casing 2 of the three-dimensional fabricating apparatus 1 in a wound state. The reel 4 is pulled by rotation of extruders 11 which are driving devices of the filament F to rotate without greatly applying a resistance force.

A discharge module 10 (fabrication head) as a fabrication material discharge member is provided above the fabrication table 3 in the casing 2. The discharge module 10 is modularized by the extruder 11, a cooling block 12, a filament guide 14, a heating block 15, a discharge nozzle 18, an imaging module 101, a torsion rotation mechanism 102, and other components. The filament F is drawn by the extruders 11 to be supplied to the discharge module 10 of the three-dimensional fabricating apparatus 1.

The imaging module 101 images a 360° image of the filament F drawn into the discharge module 10, that is, an omnidirectional image of a certain portion of the filament F. Two imaging modules are provided in the discharge module in FIG. 2. However, the single imaging module 101 may image a 360° image of the filament F, for example, by using a reflection plate. As the imaging module 101, a camera including an image forming optical system such as a lens, an imaging element such as a charge coupled device (CCD) sensor and a complementary metal oxide semiconductor (CMOS) sensor, and the like is exemplified.

The torsion rotation mechanism 102 includes rollers and rotates the filament F drawn into the discharge module 10 in the width direction to restrict the direction of the filament F. A diameter measuring unit 103 measures widths between edges of the filament in two directions, i.e., the X-axis direction and the Y-axis direction from the image of the filament imaged by the imaging module 101 as diameters and outputs error information when detecting a nonstandard diameter. An output destination of the error information may be a display, a speaker, and other device. The diameter measuring unit 103 may be a circuit and a function implemented by processing of a CPU.

The heating block 15 includes a heat source 16 such as a heater and a thermocouple 17 which controls a temperature of the heater, and heats and melts the filament F supplied to the discharge module 10 via a transfer path and supplies the filament F to the discharge nozzle 18.

The cooling block 12 is provided above the heating block 15. The cooling block 12 includes cooling sources 13 and cools the filament. As a result, the cooling block 12 prevents reverse flow of the melted filament FM to the upper portion in the discharge module 10, an increase in a resistance to push out the filament, or clogging in the transfer path due to solidification of the filament. The filament guide 14 is provided between the heating block 15 and the cooling block 12.

As illustrated in FIGS. 1 and 2, the discharge nozzle 18 which discharges the filament F that is a fabrication material is provided at a lower end portion of the discharge module 10. The discharge nozzle 18 linearly pushes out the melted or semi-molten filament FM supplied from the heating block 15 to discharge the filament FM on the fabrication table 3. The discharged filament FM is cooled and solidified to form a layer having a predetermined shape. In addition, the discharge nozzle 18 repeats the operation for linearly pushing out the melted or semi-molten filament FM and discharging the filament FM on the formed layer to laminate new layers. With this operation, a three-dimensional fabrication object can be obtained.

In the present embodiment, two discharge nozzles are provided in the discharge module 10. A first discharge nozzle melts and discharges a filament including a model material forming the three-dimensional fabrication object, and a second discharge nozzle melts and discharges a filament including a support material. In FIG. 1, the second discharge nozzle is arranged in the back of the first discharge nozzle. The number of discharge nozzles is not limited to two and may be arbitrary.

The support material discharged from the second discharge nozzle is normally different from the model material forming the three-dimensional fabrication object. A support portion including the support material is finally removed from a model portion including the model material. The filament including the support material and the filament including the model material are melted by the heating block 15 and pushed out and discharged from the discharge nozzles 18 to be sequentially laminated in layers.

Furthermore, in the three-dimensional fabricating apparatus 1, heating modules 20 which heat a lower layer of layers being formed by the discharge module 10 are provided. In each heating module 20, a laser light source 21 which emits laser is provided. The laser light source 21 irradiates a position immediately before the filament FM in the lower layer is discharged with the laser. The laser light source is not particularly limited. However, as the laser light source, a semiconductor laser is exemplified, and as an irradiation wavelength of the laser, 445 nm is exemplified.

The discharge module 10 and the heating module 20 are slidably held with respect to an X-axis drive shaft 31 (X-axis direction) extending in the horizontal direction of the apparatus (horizontal direction in FIG. 1 = X-axis direction) via a coupling member. The discharge module 10 can move in the horizontal direction of the apparatus (X-axis direction) by a driving force of an X-axis driving motor 32.

The X-axis driving motor 32 is slidably held along a Y-axis drive axis (Y-axis direction) extending in the front-back direction of the apparatus (depth direction in FIG. 1 = Y-axis direction). The X-axis drive shaft 31 moves along the Y-axis direction by a driving force of a Y-axis driving motor 33 together with the X-axis driving motor 32 so that the discharge module 10 and the heating module 20 move in the Y-axis direction.

On the other hand, a Z-axis drive shaft 34 and a guide shaft 35 pass through the fabrication table 3, and the fabrication table 3 is movably held along the Z-axis drive shaft 34 extending in the vertical direction of the apparatus (vertical direction in FIG. 1 = Z-axis direction). The fabrication table 3 moves in the vertical direction of the apparatus (Z-axis direction) by a driving force of a Z-axis driving motor 36. A heating unit for heating a laminated fabrication object may be provided in the fabrication table 3.

If the filament is continuously melted and discharged, a peripheral portion of the discharge nozzle 18 may be contaminated with melted resin. To prevent this, a cleaning brush 37 provided in the three-dimensional fabricating apparatus 1 periodically performs a cleaning operation relative to the peripheral portion of the discharge nozzle 18 to prevent resin from adhering at the front end of the discharge nozzle 18. Preferably, from the viewpoint of prevention of adhesion, the cleaning operation is performed before the temperature of the resin is sufficiently lowered. In this case, it is preferable that the cleaning brush 37 include a heat resistance member. Polishing powders generated at the time of the cleaning operation may be collected into a dust box 38 provided in the three-dimensional fabricating apparatus 1 and periodically discarded or may be discharged outside by providing a suction path.

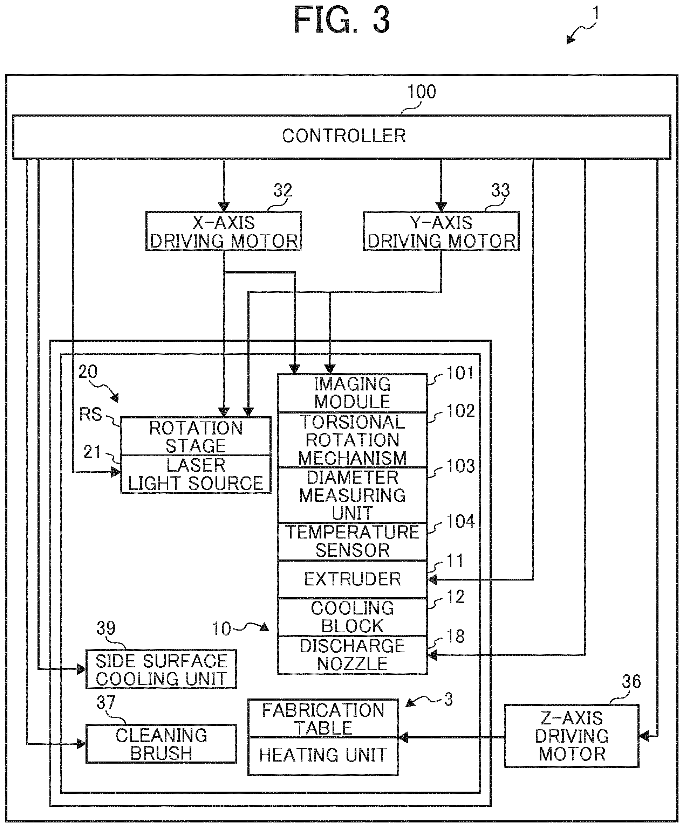

FIG. 3 is a hardware configuration diagram of the three-dimensional fabricating apparatus according to an embodiment. The three-dimensional fabricating apparatus 1 includes a controller 100. The controller 100 includes a central processing unit (CPU), a circuit, or the like and electrically connected to each unit as illustrated in FIG. 3.

In the three-dimensional fabricating apparatus 1, an X-axis coordinate detection mechanism which detects an X-axis position of the discharge module 10 is provided. The detection result of the X-axis coordinate detection mechanism is sent to the controller 100. The controller 100 controls drive of the X-axis driving motor 32 based on the detection result and moves the discharge module 10 to a target position in the X-axis direction.

In the three-dimensional fabricating apparatus 1, a Y-axis coordinate detection mechanism which detects a Y-axis position of the discharge module 10 is provided. The detection result of the Y-axis coordinate detection mechanism is sent to the controller 100. The controller 100 controls drive of the Y-axis driving motor 33 based on the detection result and moves the discharge module 10 to a target position in the Y-axis direction.

In the three-dimensional fabricating apparatus 1, a Z-axis coordinate detection mechanism which detects a Z-axis position of the fabrication table 3 is provided. The detection result of the Z-axis coordinate detection mechanism is sent to the controller 100. The controller 100 controls drive of the Z-axis driving motor 36 based on the detection result and moves the fabrication table 3 to a target position in the Z-axis direction.

In this way, the controller 100 controls the movements of the discharge module 10 and the fabrication table 3 to move relative three-dimensional positions of the discharge module 10 and the fabrication table 3 to target three-dimensional positions.

In addition, the controller 100 transmits control signals to driving units of the extruder 11, the cooling block 12, the discharge nozzle 18, the laser light source 21, the cleaning brush 37, a rotation stage RS, the imaging module 101, the torsion rotation mechanism 102, the diameter measuring unit 103, and a temperature sensor 104 to control the drive of these units. The rotation stage RS, a side surface cooling unit 39, the imaging module 101, the torsion rotation mechanism 102, the diameter measuring unit 103, and the temperature sensor 104 will be described later.

### <<Heating method>>

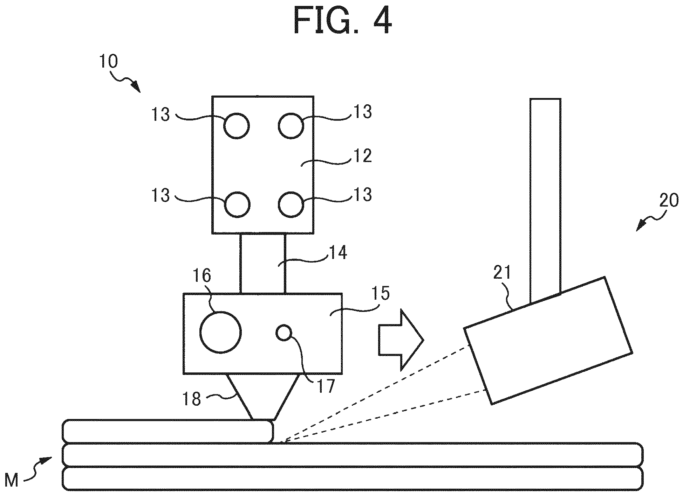

FIG. 4 is a schematic diagram of an example of an operation for heating the lower layer. Hereinafter, as an embodiment, a method for heating the lower layer with a laser will be described.

When the discharge module 10 is fabricating the upper layer, the laser light source 21 irradiates the position of the lower layer immediately before the filament FM is discharged with the laser to reheat the position. To reheat means to heat the filament FM again after the melted filament FM is cooled and solidified. The temperature of reheat is not particularly limited. However, the temperature is preferable equal to or higher than a temperature at which the filament FM of the lower layer melts.

The temperature sensor 104 senses a temperature of the lower layer before heated. The temperature sensor 104 is arranged at an arbitrary position where the temperature sensor 104 can sense a lower layer surface before heated. In the present embodiment, the temperature sensor 104 is arranged in the back of the laser light source 21 in FIG. 4. The temperature of the lower layer before heated is sensed by the temperature sensor 104 and an output of the laser is adjusted based on the sensing result so that the lower layer can be reheated to a temperature equal to or higher than a predetermined temperature. As another method, it is possible that the temperature of the lower layer during reheating is sensed by the temperature sensor 104 and energy is input from the laser to the lower layer until the sensing result reaches an arbitrary temperature or higher. At this time, the temperature sensor 104 is arranged at an arbitrary position where the temperature sensor 104 can sense a heating surface. As the temperature sensor 104, any known device may be used, and a contact type device or a non-contact type device may be used.

By reheating the surface of the lower layer, a difference between the temperature of the lower layer and the temperature of the filament FM discharged on the surface of the lower layer is reduced and the lower layer is mixed with the discharged filament so as to improve adhesiveness in the lamination direction.

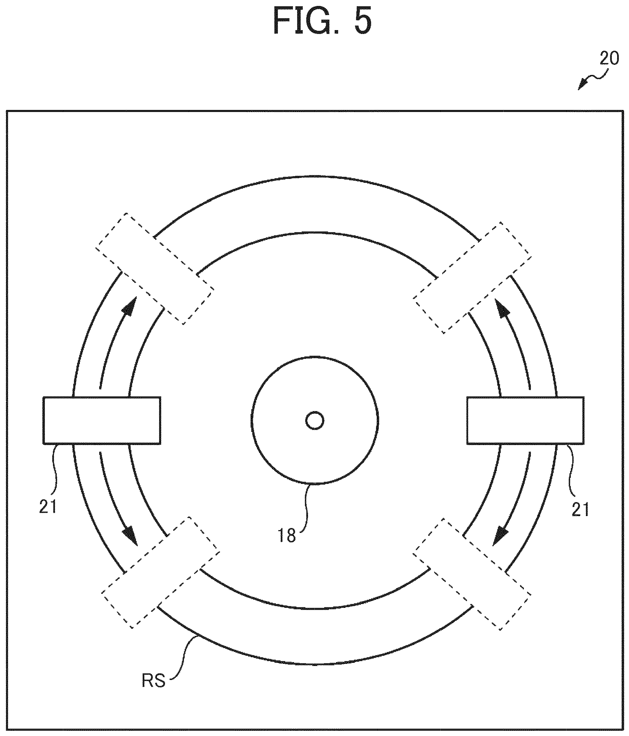

FIG. 5 is a plan view of a heating module according to an embodiment as viewed from the side of the fabrication table 3. In FIG. 5, the heating modules 20 are attached to the rotation stage RS. The rotation stage RS rotates about the discharge nozzle 18. The laser light source 21 rotates and moves in accordance with the rotation of the rotation stage RS. With this movement, the laser light source 21 can irradiate the discharge position of the discharge nozzle 18 with laser light in advance even when the moving direction of the discharge nozzle 18 is changed.

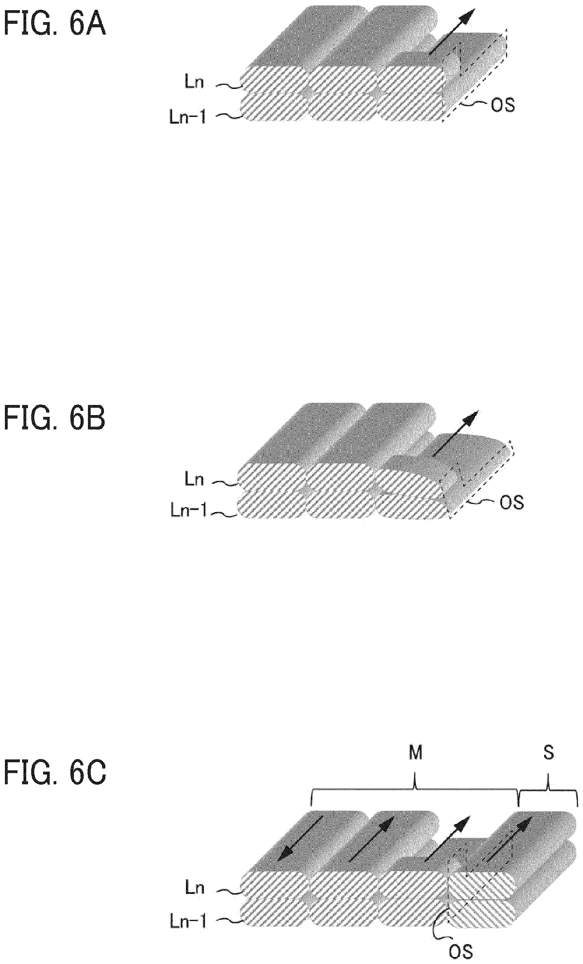

FIGS. 6A to 6C are schematic diagrams of states of the fabrication object at the time of forming the upper layer. Hereinafter, a layer which is fabricated by the discharge module 10 is referred to as an upper layer Ln, a layer below the fabricating layer is referred to as a lower layer Ln-1, and a layer below the lower layer Ln-1 is referred to as a lower layer Ln-2. Arrows in FIGS. 6A to 6C indicate a movement path (tool path) of the discharge module. In FIGS. 6A to 6C and the following figures, the discharged filament is expressed by elliptic cylinders so as to recognize the tool path of the discharge module. Therefore, voids are formed between the filaments. However, in actual, it is preferable to fabricate the object without forming the voids in terms of strength.

FIG. 6A is a schematic diagram of a fabrication object when the upper layer is formed without reheating the lower layer. If the upper layer Ln is formed without reheating the lower layer Ln-1, the upper layer Ln can be formed in a state where the lower layer Ln-1 is solidified. Therefore, an outer surface OS is not deformed. However, in this case, sufficient adhesion strength between the upper layer Ln and the lower layer Ln-1 cannot be obtained.

FIG. 6B is a schematic diagram of a fabrication object when the upper layer is formed while reheating the lower layer. If the upper layer Ln is formed while reheating the lower layer Ln-1, the upper layer Ln can be formed in a state where the lower layer Ln-1 is melted. Therefore, the outer surface OS is deformed.

FIG. 6C is a schematic diagram of a fabrication object when the upper layer is formed while reheating the lower layer. In the example in FIG. 6C, even if the upper layer Ln is formed while the lower layer Ln-1 of a model portion M is reheated, the model portion M is supported by a support portion S. Therefore, the outer surface OS of the model portion M is not deformed.

In the present embodiment, the upper layer Ln is formed in a state where the lower layer Ln-1 is partially remelted. As a result, entanglement of polymer between the upper layer Ln and the lower layer Ln-1 is promoted, and the strength of the fabrication object is enhanced. In addition, by appropriately setting the conditions of remelting, it is possible to achieve both of shape accuracy and strength of the model portion in the lamination direction. A setting example of a remelting region and an effect in the present embodiment will be described later.

The model material and the support material may be the same or may be different from each other. For example, even in a case where the model portion M and the support portion S include the same material, by controlling a strength of an interface of these portions, the portions can be separated from each other after fabrication.

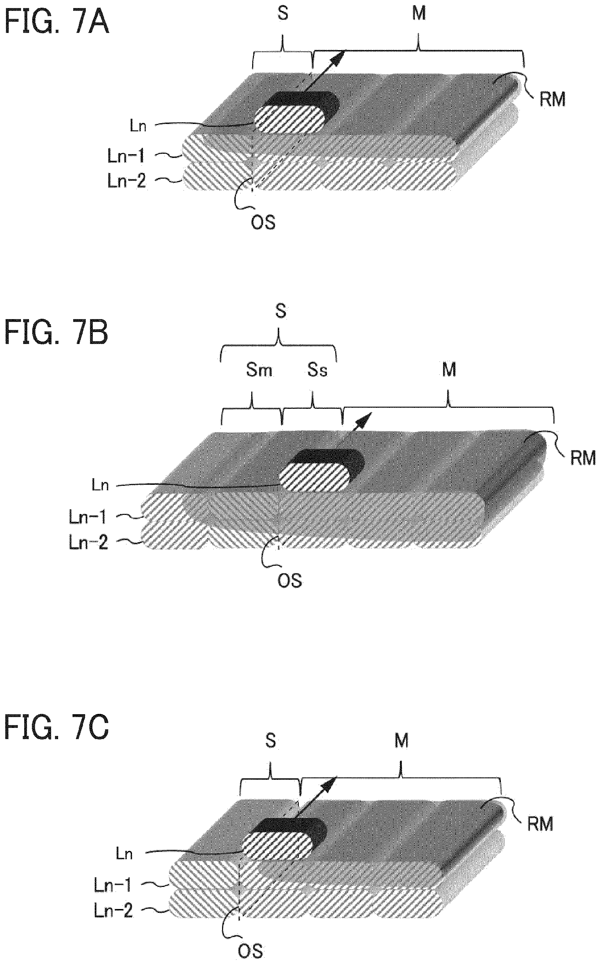

FIGS. 7A to 7C are schematic diagrams of states of the fabrication object at the time of forming the upper layer. In a fabrication method in FIG. 7A, the three-dimensional fabricating apparatus 1 reheats the surface of the model portion M of the lower layer Ln-1 and the surface of the support portion S except for an outer peripheral portion, forms a remelted portion RM, and forms the upper layer Ln. According to this method, since a region of the model portion M on the side of the outer surface OS is remelted and fabricated, adhesiveness between the layers is improved, and the strength in the lamination direction is enhanced. In addition, by melting the outer surface OS, the support portion S and the model portion M are hardly separated during fabrication, and fabrication accuracy is improved. However, if the adhesiveness between the support portion S and the model portion M becomes too high, releasability of the fabricated support portion S is deteriorated. In addition, according to a heating temperature, the strength of the model portion M may decrease by mixing the support portion S into the model portion M. In a case of using a method for heating the lamination surface with no contact or having contact with and heating the lamination surface, the mixture of the materials can be prevented by devising a movement of a contact member and cleaning the contact member. The releasability of the support portion S can be improved by using a material different from the model material and having a melting point lower than a melting point of the model material as the support material.

In a fabrication method in FIG. 7B, the three-dimensional fabricating apparatus 1 forms the support portion S using the model material and the support material. In this case, the three-dimensional fabricating apparatus 1 arranges the support material in a region Ss of the support portion S on the side of the model portion M and arranges the model material in a region Sm on the outer periphery side. In this case, the three-dimensional fabricating apparatus 1 may form the model portion M and the region Sm in the support portion S by using the model material and subsequently flows the support material into gaps between the model material to fabricate the target object. Subsequently, the three-dimensional fabricating apparatus 1 forms the upper layer Ln while reheating the surface of the model portion M of the lower layer Ln-1 and the surface of the support portion S except for the outer peripheral portion.

The fabrication method in FIG. 7B is suitable for a case where the releasability of the support portion S is excellent. Furthermore, the fabrication method in FIG. 7B is preferable in a point that, even in a case where the shape accuracy of the region Ss and strength as a structure are low, the region Sm supports the region Ss to supplement the shape accuracy and the strength of the region Ss.

In a fabrication method in FIG. 7C, the three-dimensional fabricating apparatus 1 forms the upper layer Ln while reheating the surface of the model portion M except for the vicinity of the outer surface OS. According to this method, since the heat of the model portion M is hardly transmitted to the support portion S at the time of remelting, the shape of the support portion S is stabilized. The fabrication method in FIG. 7C is effective in that the shape of the model portion M is easily maintained and the releasability between the model portion M and the support portion S can be easily secured. However, the strength in the lamination direction is weaker than that in a case of the fabrication method for remelting the entire surface of the model portion M. Therefore, the fabrication method in FIG. 7C is effective in a case where a fabrication object of which an internal structure is strong is fabricated and in a case where emphasis is placed on fabrication accuracy and the releasability.

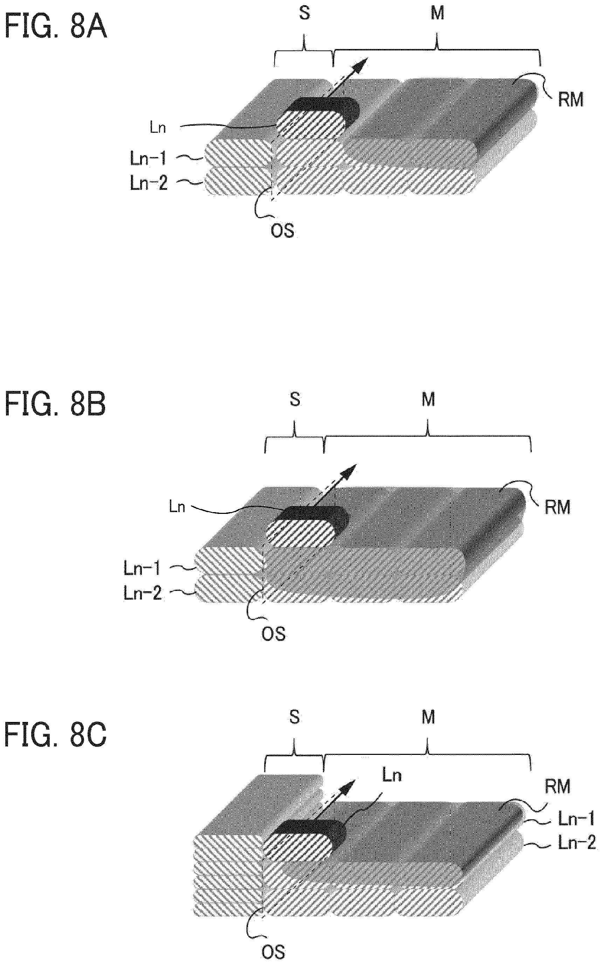

FIGS. 8A to 8C are schematic diagrams of states of the fabrication object at the time of forming the upper layer. The fabrication method in FIG. 8A is different from the fabrication method in FIG. 7C in that a region in the surface of the model portion M which is not remelted is enlarged to a position farther away from the outer surface OS and the remelted portion RM is further reduced. The fabrication method in FIG. 8A is more effective than the fabrication method in FIG. 7C in that the shape of the model portion M can be maintained since the shape of the support portion S is stabilized. On the other hand, the strength of the model portion M in the lamination direction is further reduced.

The fabrication method in FIG. 8B is different from the fabrication method in FIG. 7C in that the surface of the lower layer Ln-1 is reheated to the vicinity of the outer surface OS of the model portion M. The fabrication method in FIG. 8B is effective in a case where a melting point of the support material is higher than a melting point of the model material. According to the fabrication method in FIG. 8B, the strength of the model portion M in the lamination direction is stronger than the strength of the fabrication method in FIG. 7C.

In the fabrication method in FIG. 8C, after discharging the support material of the upper layer Ln in advance and forming the support portion S, the three-dimensional fabricating apparatus 1 remelts the model portion M of the lower layer Ln-1 and forms the model portion M of the upper layer Ln. Since the support portion S is finally removed after fabrication, it is preferable that the support portion S has a strength enough not to be peeled off during the fabrication, and the strength as strong as the model material is not required. Therefore, it is preferable to select a material which can be more accurately laminated than the model material as the support material. By forming the support portion S of the upper layer Ln in a state where the lower layer Ln-1 is solidified, the fabrication accuracy of the support portion S is improved. According to the fabrication method in FIG. 8C, the support portion S and the model portion M are independently formed. Therefore, the three-dimensional fabricating apparatus 1 can make a lamination pitch of the support portion S be narrower than a lamination pitch of the model portion M. For example, in the structure in FIG. 8C, the lamination pitch of the support portion S is half of the lamination pitch of the model portion M. Since the melted model material follows the shape of the support portion S, by narrowing the lamination pitch of the support portion S, the outer surface OS of the model portion M becomes smoother. The method in FIG. 8C is preferable in a case where the support portion S can be more accurately fabricated than the model portion M.

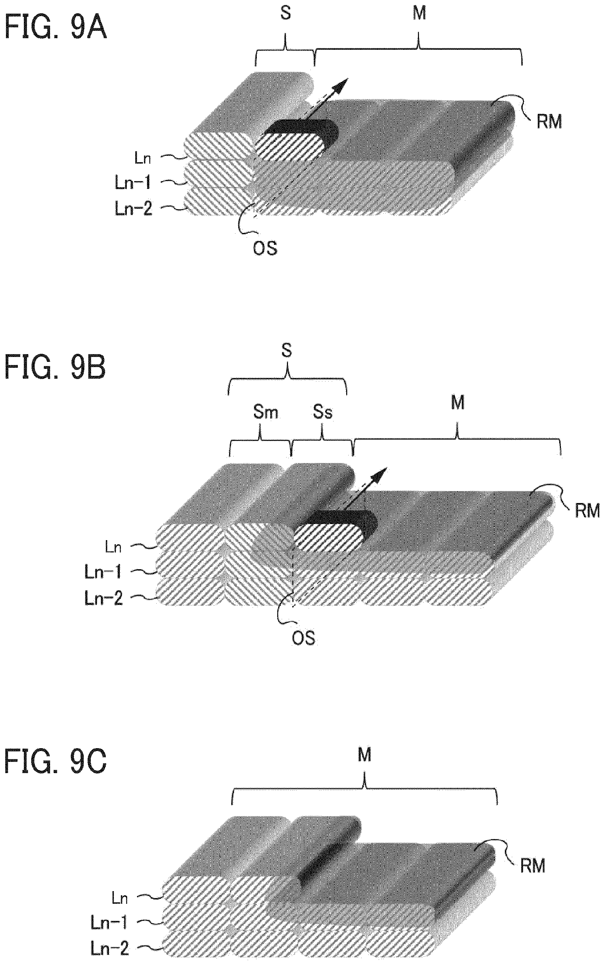

FIGS. 9A to 9C are schematic diagrams of states of the fabrication object at the time of forming the upper layer. The fabrication method in FIG. 9A is different from that in FIG. 8B in that the model portion M of the upper layer Ln is formed after the support portion S of the upper layer Ln is formed in advance. In a case where the melting point of the support material is higher than the melting point of the model material, even when heated to the vicinity of the outer surface OS of the model portion M, the support portion S is not melted. According to the fabrication method in FIG. 9A, a fabrication object with excellent releasability and a high strength in the lamination direction can be obtained, and the fabrication accuracy is improved.

The fabrication method in FIG. 9B is different from the method in FIG. 7B in that the model portion M of the upper layer Ln is formed after the support portion S of the upper layer Ln is formed in advance. Furthermore, according to the method in FIG. 9B, even in a case where the shape accuracy of the region Ss and strength as a structure are low, the region Sm supports the region Ss to supplement the shape accuracy of the region Ss and the strength as a structure. However, according to the fabrication method in FIG. 9B, when the region Ss melts at the time of remelting, the releasability of the support portion S may be deteriorated.

The fabrication method in FIG. 9C is different from that in FIG. 8A in that, after forming the outer peripheral side of the model portion M of the upper layer Ln in advance, the remaining portion of the model portion M of the upper layer Ln is fabricated. According to the fabrication method in FIG. 9C, only the model portion M is used for fabrication, the shape is stabilized, and the fabrication accuracy is improved. Furthermore, since the fabrication is performed while remelting a part of the side surface of the model portion M of the upper layer Ln, the strength of the model portion M is enhanced.

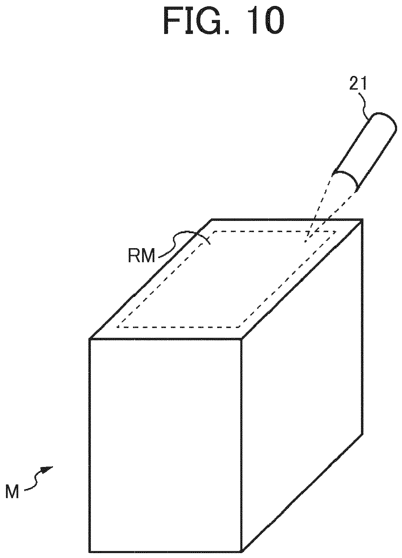

FIG. 10 is a schematic view of an example of a reheating range according to the present embodiment. To maintain the outer shape, the three-dimensional fabricating apparatus 1 intentionally narrows the remelted portion RM without reheating the outer peripheral portion of the three-dimensional fabrication object M so as to maintain the shape of the fabrication object and improve adhesion between the laminated layers.

### <<Processing and Operation>>

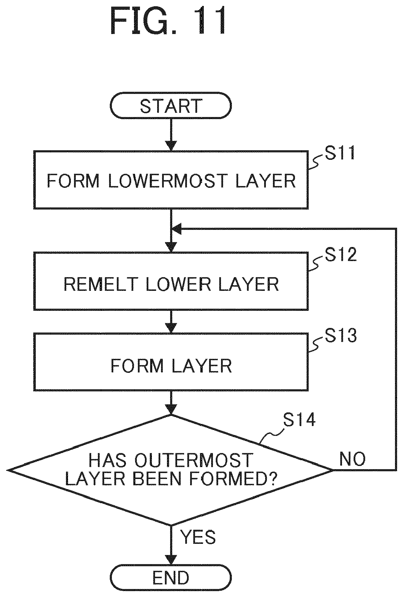

Subsequently, processing and an operation of the three-dimensional fabricating apparatus 1 according to an embodiment will be described. FIG. 11 is a flowchart of fabrication processing according to an embodiment.

The controller 100 of the three-dimensional fabricating apparatus 1 receives an input of data of a three-dimensional model. The data of the three-dimensional model is constructed by image data of each layer when the three-dimensional model is sliced at predetermined intervals.

The controller 100 of the three-dimensional fabricating apparatus 1 drives the X-axis driving motor 32 or the Y-axis driving motor 33 to move the discharge module 10 in the X-axis or Y-axis direction. While the discharge module 10 moves, the controller 100 discharges the melted or semi-molten filament FM from the discharge nozzle 18 to the fabrication table 3 based on the image data of the lowermost layer of the input data of the three-dimensional model. Accordingly, the three-dimensional fabricating apparatus 1 forms a layer having a shape based on the image data on the fabrication table 3 (step S11).

While the discharge module 10 moves, the controller 100 emits laser from the laser light source 21 based on the image data of the lowermost layer of layers which are not fabricated yet of the input data of the three-dimensional model. As a result, a laser irradiation position of the lower layer is remelted (step S12). Note that, as in the fabrication methods in FIGS. 7C, 8A, 8C, and 9C, the controller 100 may irradiate inside of a range indicated by the image data with the laser. Alternatively, for example, as in the fabrication methods in FIGS. 7A, 7B, and 9B, the controller 100 may emit the laser beyond the range indicated by the image data. A heating temperature of the lower layer in step S12 is controlled to be equal to or higher than a melting temperature of the filament.

While the discharge module 10 moves, the controller 100 discharges the filament FM from the discharge nozzle 18 to the lower layer on the fabrication table 3 based on the image data of the lowermost layer of layers which are not fabricated yet of the input data of the three-dimensional model. As a result, a layer having a shape corresponding to the image data is formed on the lower layer (step S13). At this time, since the lower layer is remelted, adhesiveness of an interface between a layer to be fabricated and the lower layer is improved.

The processing for remelting the lower layer in step S12 and the processing for forming the layer in step S13 may be overlapped. In this case, the three-dimensional fabricating apparatus 1 starts to discharge the filament FM from the start of processing for irradiating the lower layer with the laser and before completion of the irradiation of the entire irradiation range with the laser.

The controller 100 of the three-dimensional fabricating apparatus 1 determines whether the layer formed in step S13 is the outermost layer (step S14). The outermost layer is a layer formed based on image data having the largest coordinate in the lamination direction (Z axis) of the data of the three-dimensional model. In a case where it has been determined as NO in step S14, the controller 100 of the three-dimensional fabricating apparatus 1 repeats the processing for remelting (step S12) and the processing for forming the layer (step S13) until the outermost layer is formed.

When the formation of the outermost layer is completed (YES in step S14), the three-dimensional fabricating apparatus 1 terminates the fabrication processing.

### <<<Modification A of Embodiment>>>

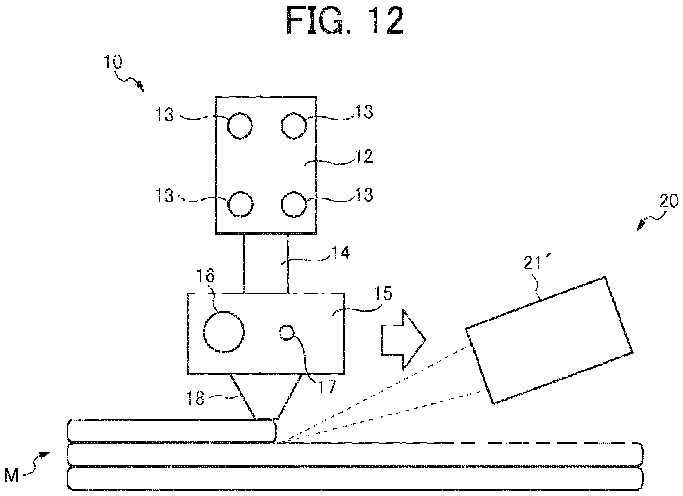

Subsequently, regarding a modification A of the embodiment, a point different from the embodiment will be described. FIG. 12 is a schematic diagram of an operation for heating the lower layer according to an embodiment.

In the modification A of the embodiment, the heating module 20 includes a hot air source 21'. As the hot air source 21' , a heater and a fan are exemplified. In the modification A of the embodiment, the hot air source 21' blows high-temperature hot air against the lower layer to heat and remelt the lower layer. In the modification A of the embodiment, the filament FM is discharged to the remelted lower layer to form the upper layer so that materials of the lower layer and the upper layer are mixed and the adhesiveness between the upper layer and the lower layer is improved.

### <<<Modification B of Embodiment>>>

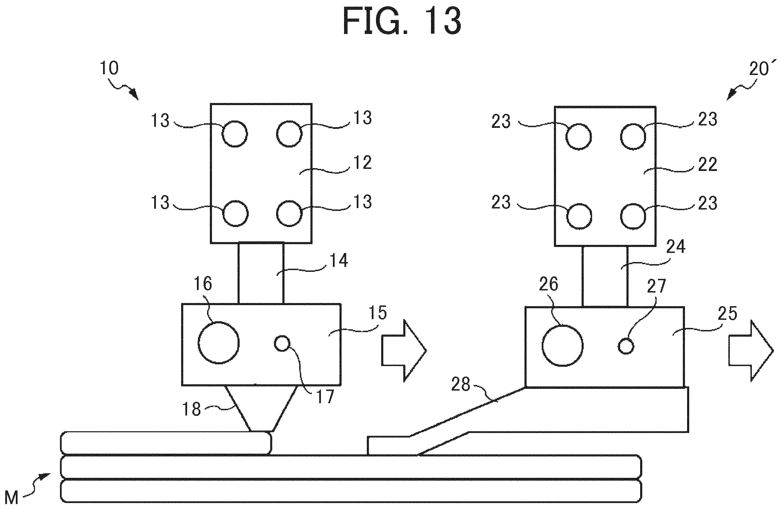

Next, regarding a modification B of the embodiment, a point different from the embodiment will be described. FIG. 13 is a schematic diagram of an operation for heating the lower layer according to an embodiment.

In the modification B of the embodiment, the heating module 20 of the three-dimensional fabricating apparatus 1 is replaced with a heating module 20' . The heating module 20' includes a heating plate 28 which heats and pressurizes the lower layer of the three-dimensional fabrication object M, a heating block 25 which heats the heating plate 28, and a cooling block 22 which prevents heat conduction from the heating block 25. The heating block 25 includes a heat source 26 such as a heater and a thermocouple 27 which controls the temperature of the heating plate 28. The cooling block 22 includes cooling sources 23. A guide 24 is provided between the heating block 25 and the cooling block 22.

The heating module 20' is slidably held with respect to the X-axis drive shaft 31 (X-axis direction) extending in the horizontal direction of the apparatus (horizontal direction in FIG. 1 = X-axis direction) via a coupling member. The heating module 20' is heated to a high temperature by the heating block 25. To prevent the heat from transferring to the X-axis driving motor 32, it is preferable that the transfer path including the filament guide 14 and the like or the guide 24 have low thermal conductivity.

In the heating module 20' , the lower end of the heating plate 28 is arranged to be lower than the lower end of the discharge nozzle 18 by a single layer. While the discharge module 10 and the heating module 20 are scanned in an outline arrow direction in FIG. 13 and the filament is discharged, and at the same time, the heating plate 28 reheats the layer below the layer which is fabricated. As a result, a temperature difference between the fabricating layer and the layer below the fabricating layer decreases, and the materials of the layers are mixed. Therefore, the strength between the layers of the fabrication object is improved. As a method for cooling the heated layer, a method for setting an atmospheric temperature, a method for leaving the layer for a predetermined time, or a method using a fan and the like are exemplified.

According to the modification B of the embodiment, by physically mixing the materials of the layers, adhesion of the interface between the layers can be improved. Furthermore, according to the modification B of the embodiment, the lower layer is selectively heated without deforming the outer shape of the fabrication object, and next discharge is performed when the lower layer is remelted, so that the adhesion of the interface is improved.

### <<<Modification C of Embodiment>>>

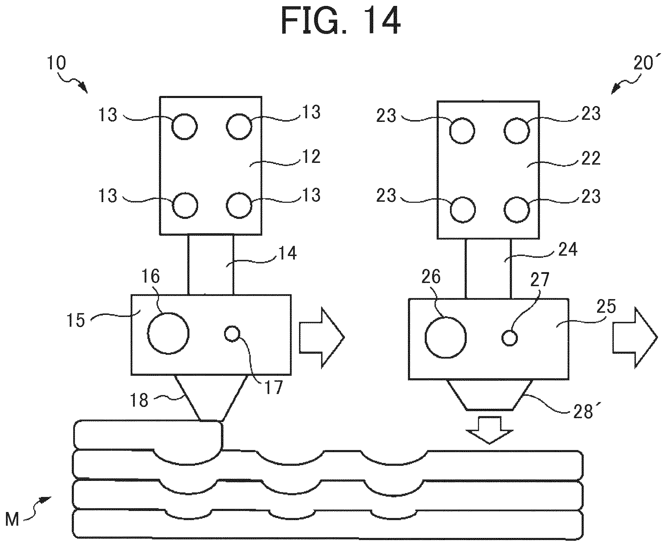

Subsequently, regarding a modification C of the embodiment, a point different from the modification B of the embodiment will be described. FIG. 14 is a schematic diagram of the operation for heating the lower layer according to an embodiment.

In the modification C of the embodiment, the heating plate 28 in the heating module 20' is replaced with a tap nozzle 28' . The tap nozzle 28' is heated by the heating block 25. The tap nozzle 28' heats and pressurizes the lower layer of the three-dimensional fabrication object M by a tap operation for repeatedly tapping the three-dimensional fabrication object M from above in the vertical direction by power of a motor and the like. With this operation, a temperature difference between the fabricating layer and the layer below the fabricating layer decreases, and the materials of the layers are mixed. Therefore, the strength between the layers of the fabrication object is improved. After the tap operation, the filament FM is discharged from the discharge nozzle 18 so as to fill the surface of the lower layer recessed by the tap operation. By filling the recessed portion of the lower layer with the filament FM, the shape of the outermost layer is smoothly finished.

### <<<Modification D of Embodiment>>>

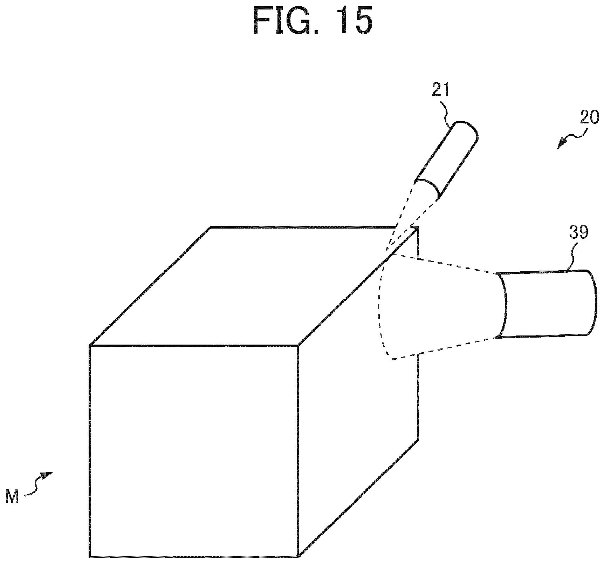

Next, regarding a modification D of the embodiment, a point different from the embodiment will be described. FIG. 15 is a schematic diagram of the operation for heating the lower layer according to an embodiment.

In the modification D of the embodiment, the heating module 20 includes the side surface cooling unit 39 which cools the side surface of the three-dimensional fabrication object M, that is, a surface parallel to the Z axis. As the side surface cooling unit 39, a cooling source is not particularly limited as long as the cooling source is capable of cooling the side surface of the three-dimensional fabrication object M. However, a fan is exemplified.

When the outer peripheral portion of the three-dimensional fabrication object M is reheated without performing the processing for maintaining the outer shape, the outer shape is deformed, and the fabrication accuracy is deteriorated. Therefore, in the modification D of the embodiment, by reheating the outer peripheral portion of the three-dimensional fabrication object M while blowing cooling air against the side surface of the three-dimensional fabrication object M, the shape of the fabrication portion is maintained, and the materials can be laminated.

### <<<Modification E of Embodiment>>>

Next, regarding a modification E of the embodiment, a point different from the embodiment will be described.

When the lower layer or the fabrication space is fabricated while heating the lower layer or the fabrication space, viscosity of the heating unit of the three-dimensional fabrication object M decreases. Therefore, it is possible that the outer shape is deformed and the fabrication accuracy is lost. On the other hand, when the lower layer or the fabrication space is fabricated without heating the lower layer or the fabrication space, the viscosity of the three-dimensional fabrication object M is increased. However, it is difficult to maintain the strength in the lamination direction. Therefore, in the modification E of the embodiment, fabrication is performed using a filament of which material composition is unevenly distributed.

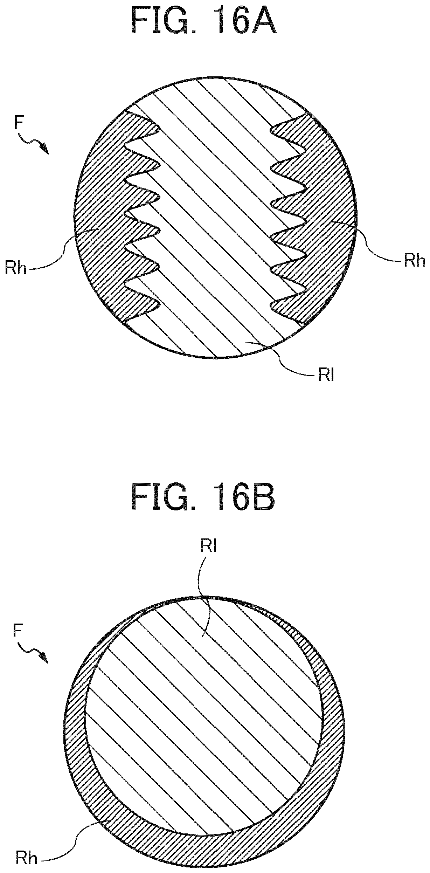

FIGS. 16A and 16B are cross-sectional views of examples of the filament of which the material composition is unevenly distributed. In the example in FIG. 16A, a high-viscosity resin Rh is arranged on both sides of the filament F, and a low-viscosity resin R1 is arranged in the center portion.

The high-viscosity resin Rh arranged on both sides of the filament F is not particularly limited. However, as the high-viscosity resin Rh, a resin formed to be highly viscous by compounding fillers such as alumina, carbon black, carbon fibers, and glass fibers can be exemplified. In a case where the filler interferes with a desired function, a resin of which a molecular weight is controlled may be used as the high-viscosity resin Rh.

The low-viscosity resin R1 arranged in the center portion of the filament F is not particularly limited. However, a resin having a low molecular weight grade is exemplified.

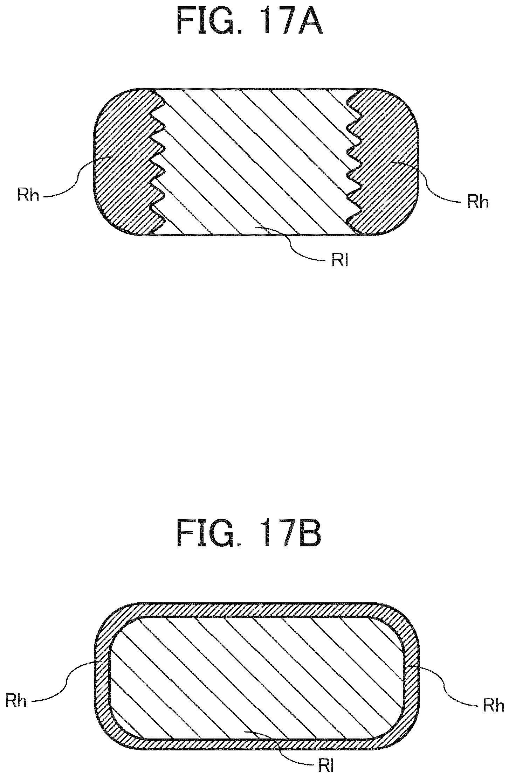

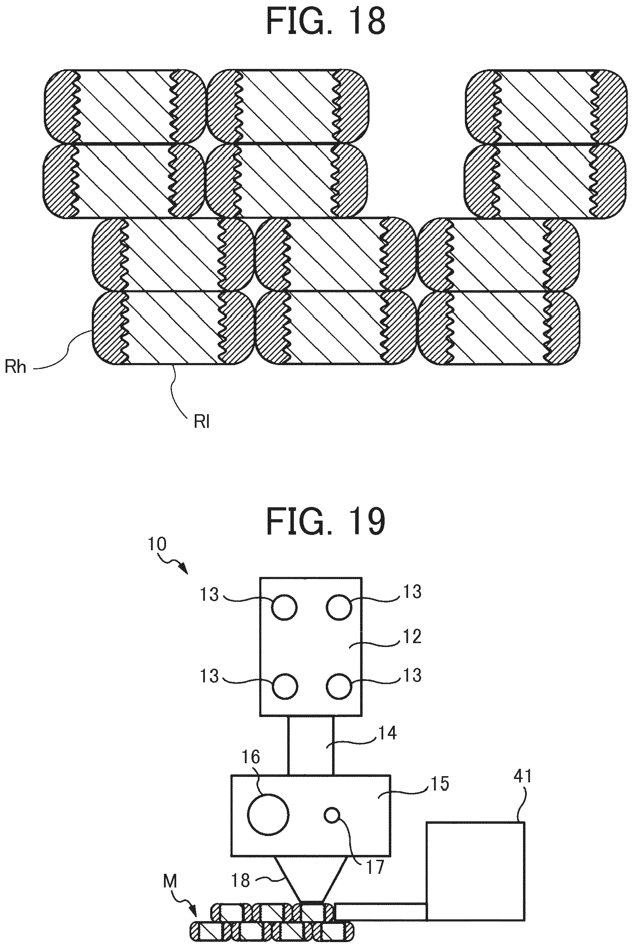

FIGS. 17A and 17B are cross-sectional views of a discharged object of the filament in FIGS. 16A and 16B. FIG. 18 is a cross-sectional view of a fabrication object fabricated by using the filament in FIGS. 16A and 16B. By discharging the filament in FIG. 16A, the discharged object having the shape illustrated in FIG. 17A is obtained, and the fabrication object in FIG. 18 is obtained. In the fabrication object in FIG. 18, since the high-viscosity resin is arranged in the outer peripheral portion, naturally, the shape of the fabrication object is hardly deformed.

In FIG. 16B, another example of a filament of which a material composition is unevenly distributed is illustrated. By discharging the filament in FIG. 16B, the discharged object having the shape illustrated in FIG. 17B is obtained. In this way, by using the filament in FIG. 16B, the fabrication object in which the high-viscosity resin is arranged in the outer peripheral portion is obtained. In addition, in the viewpoint of manufacturing method, there is an advantage such that this configuration in which the low-viscosity resin is wrapped easily forms the filament than the configuration in FIG. 17A.

However, when the filament in FIG. 17B is used, a lower portion of the layer has high viscosity. The high-viscosity resin often has a melting point higher than a melting point of the low-viscosity resin. To prevent movement of the melted resin in the horizontal direction when the lower layer is remelted at a high temperature, it is preferable to avoid to heat the outer peripheral portion of the fabrication object. Therefore, as a heating device, a laser and the like capable of heating a small spot is preferable.

To improve the adhesion of the outer peripheral portion in the lamination direction, in a case where the outer peripheral portion is heated, it is preferable that the outer peripheral portion be heated by directly providing a plate and the like from the side of the fabrication object. With this configuration, the horizontal movement of the resin due to reduction in the viscosity is restricted. FIG. 19 is a schematic diagram of an example of a three-dimensional fabricating apparatus including a restricting device.

In the example in FIG. 19, the three-dimensional fabricating apparatus 1 includes an assist mechanism 41 as an example of a restricting device. In an FFF method, the thickness of the single layer is about 0.10 to 0.30 mm. Therefore, the plate in the assist mechanism 41 is a thin plate such as a thickness gauge. The assist mechanism 41 is fixed to the discharge module 10 or a bracket which is indirectly fixed to the discharge module 10.

It is preferable that the plate in the assist mechanism 41 be heated to a temperature higher than a normal temperature. Depending on the used resin, there is a case where a crystal resin is rapidly cooled when the normal-temperature plate has contact with the resin so that amorphization advances and a desired strength cannot be obtained.

Generally, the viscosity is expressed by a function of the temperature and a shear velocity. Engineering plastic used in the Fused Filament Fabrication (FFF) or super engineering plastic exhibits a nonlinear behavior relative to a variable such as a temperature or a shear velocity. Therefore, even if the temperature is not equal to or higher than a melting point Tm of the resin, a shear resistance for the FFF method, that is, the viscosity of resin may be obtained. On the other hand, in a case where the viscosity at a desired shear velocity (S. Rate) is too low in a region having a temperature of equal to or higher than the melting point Tm, disadvantages such as liquid drip from a nozzle, insufficient retraction at the time of retracting the filament (retracting operation), a short shot at the initial discharge associated with the insufficient retraction, deformation of the fabrication object, and the like occur.

In the resin having a predetermined temperature equal to or higher than the melting point Tm, generally, at the time of S.Rate = 0, that is, at the time of non-discharging operation, the viscosity at that temperature becomes the highest. In a case where liquid drips occur in this state, composition of a resin by a filler may be an effective method for preventing the liquid drips. By adding a filler to a resin and controlling a compounding ratio or particle size/fiber length distribution and the like of the compounding material, thixotropy at the time of melting is applied, and the resin is hardly dripped at the time of non-discharging operation, and the viscosity of the resin is low at the time of discharging operation.

For deformation of the fabrication object which is easily generated in association with an increase in the temperature of the lower layer, the method for adding the filler to the filament is preferable. In a case where the fabrication accuracy cannot be maintained even when the filler is added, it is preferable to restrict the side surface of the fabrication object.

### <<<Modification F of Embodiment>>>

Subsequently, regarding a modification F of the embodiment, a point different from the modification E of the embodiment will be described.

In a case where the filament of which the material composition is unevenly distributed is used, it is preferable to restrict the direction of the filament to be introduced into the discharge module 10 so that the high-viscosity resin Rh is arranged in the outer peripheral portion of the fabrication object.

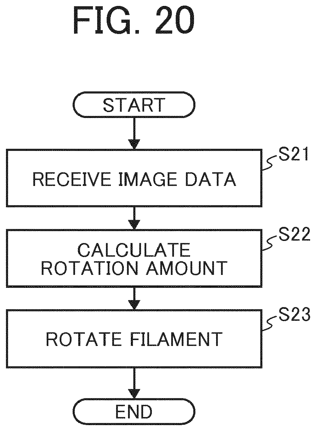

FIG. 20 is a flowchart of an example of processing for restricting the direction of the filament. The imaging module 101 of the three-dimensional fabricating apparatus 1 images the filament to be introduced into the discharge module 10 and transmits the obtained image data to the controller 100.

The controller 100 receives the image data of the filament transmitted by the imaging module 101 (step S21). The controller 100 analyzes the received image data of the filament and calculates a rotation amount (step S22). A calculation method for the rotation amount is not particularly limited. However, as the calculation method, a method for determining the rotation amount so that a boundary between the high-viscosity resin Rh and the low-viscosity resin R1 in the filament F is set to be a predetermined position is exemplified. For example, in a case where the filament is discharged while moving the discharge module 10 in the X-axis direction, the high-viscosity resin Rh of the filament is unevenly distributed in the positive and negative directions of the Y axis so that high-viscosity resin is arranged in the outermost layer of the fabrication object. Therefore, the controller 100 determines the rotation amount of the filament so that the resin Rh is arranged to be unevenly distributed in the positive and negative directions of the Y axis.

The controller 100 transmits a signal to rotate the filament to the torsion rotation mechanism 102 based on the determined rotation amount. The torsion rotation mechanism 102 rotates the filament based on the signal (step S23). With this movement, the filament is restricted in a desired direction.

When the high-viscosity resin is arranged on the outer side of the filament, in the transfer path, the flow velocity of the filament on the side of the wall is extremely slow and the high-viscosity resin is retained so that there is a case where the filament cannot be discharged in desired arrangement. Therefore, in a region on the downstream side of the heating block 25 in a conveyance path, that is, in a region to which a temperature equal to or higher than a melting point is applied, it is preferable that an inner wall of the transfer path be processed with fluorine and the like with high heat resistance. By forming a release layer in the transfer path, a frictional resistance between the melted resin and the inner wall of the transfer path is reduced, and the high-viscosity resin is hardly retained.

Furthermore, in consideration of a time lag of conveyance in a section from the torsion rotation mechanism 102 to the discharge nozzle 18, the controller 100 preferably performs feedforward control so as to prevent control delay. For example, the controller 100 controls the driving of the torsion rotation mechanism 102 so that the direction of the filament is switched at a timing when a traveling direction of the discharge module 10 is curved. Furthermore, in a case where the discharge module 10 is traveled along a curved line, the controller 100 controls the driving of the torsion rotation mechanism 102 in a stepwise manner in consideration of the time lag.

In a state where the filament is extremely twisted, there is a possibility that the filament is tangled on a path from the reel 4 to an introduction portion of the discharge module 10. It is very hard to untangle the filament for a user. Therefore, it is preferable that a guide tube be introduced from the reel 4 to the introduction portion. However, in a case where the filament is extremely twisted, a frictional resistance between the guide tube and the filament increases, and there is a case where the filament is not normally introduced. Furthermore, in an orifice portion having a narrower inner diameter such as a joint of the guide tube and the like, there is a possibility that the filament is scraped. Furthermore, a reinforced filament and the like in which a filler is compounded often loses flexibility that is peculiar to the resin. When a torsional load is applied to such a filament, the filament breaks, and there is a case where normal fabrication cannot be performed.

Therefore, it is preferable that the controller 100 restrict a cumulative torsion amount of the filament to, for example, ± 180° from a reference angle.

Furthermore, for example, as in FIGS. 17A and 17B, a mechanism capable of rotating the entire discharge module 10 may be used instead of a mechanism for rotating the filament so that the resin is arranged in a desired state in the discharged object. In this case, since the thermocouple 17 for controlling the heat source 16, a plurality of wiring systems such as wiring of the heat source 16, wiring of the cooling source 13, and an overheat protector are simultaneously rotated, the wiring is more complicated than the rotation direction of the filament.

### <<<Modification G of Embodiment>>>

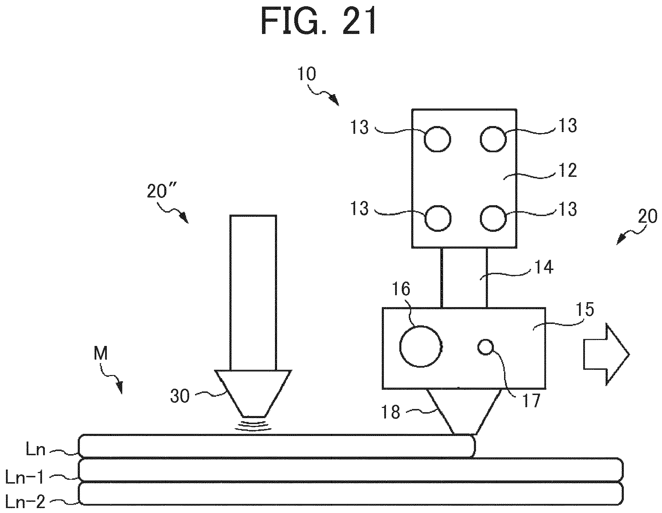

Next, regarding a modification G of the embodiment, a point different from the embodiment will be described. FIG. 21 is a schematic diagram of a fabrication and surface treatment operation according to an embodiment.

In the modification G of the embodiment, the three-dimensional fabricating apparatus 1 includes a heating module 20''. The heating module 20'' includes a horn 30 which heats and pressurizes the three-dimensional fabrication object M. An ultrasonic vibration device is provided in the three-dimensional fabricating apparatus 1. The horn 30 moves downward from above of a lamination surface of the three-dimensional fabrication object M by the Z-axis driving motor and applies a pressure to the lamination surface. With this movement, ultrasonic vibration generated by the ultrasonic vibration device is transmitted to the three-dimensional fabrication object M. When the ultrasonic vibration is transmitted to the three-dimensional fabrication object M, the upper layer Ln and the lower layer Ln-1 of the three-dimensional fabrication object M are welded and joined. In the three-dimensional fabricating apparatus 1, the number of horns 30 is not limited to one and is appropriately selected. In a case where the plurality of horns 30 is provided, the shapes of the horns are not uniformed, and the horns having different shapes may be mounted.

### <<<Modification H of Embodiment>>>

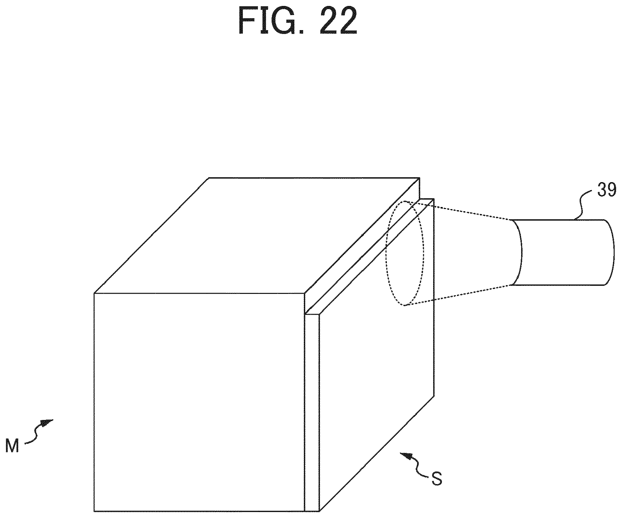

FIG. 22 is a schematic diagram of a cooling operation according to an embodiment. In a modification H of the embodiment, the three-dimensional fabricating apparatus 1 includes the side surface cooling unit 39 as in the modification D. As the side surface cooling unit 39, a cooling source is not particularly limited as long as the cooling source is capable of cooling the side surface of the three-dimensional fabrication object M. However, a fan is exemplified. Furthermore, as another cooling method other than the method using the side surface cooling unit 39, a method for setting an atmospheric temperature, a method for leaving the side surface for a predetermined time, and the like are exemplified.

Each time when a single layer of the model portion M is formed, the side surface cooling unit 39 cools the side surface of the model portion M. By forming a support portion of the same layer after that, in a region where the model portion M has contact with the support portion S, mixture of the model material and the support material can be prevented, and a bonding degree can be weakened. As a result, releasability at the time of removing the support portion S can be improved.

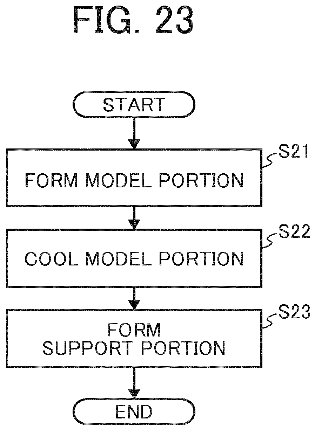

FIG. 23 is a flowchart of fabrication processing according to an embodiment and illustrates steps S11 and S13 in FIG. 11 in detail.

Along with start of the processing for forming the layers in steps S11 and S13, the three-dimensional fabricating apparatus 1 starts the processing in FIG. 23. In step S21, the discharge module 10 of the three-dimensional fabricating apparatus 1 discharges a melted filament to form the model portion M.

In step S22, the side surface cooling unit 39 cools the formed model portion M to solidify the model portion M. At this time, the side surface cooling unit 39 may cool a portion other than the model portion formed in step S21. For example, in a case where a second layer and subsequent layers are formed, the lower layer reheated and melted of the model portion which has been already formed may be cooled. Furthermore, the side surface cooling unit 39 may cool the entire model portion M and may cool a region of the model portion M having contact with the support portion S.

The three-dimensional fabricating apparatus 1 may include the temperature sensor 104 and may obtain the temperature of the model portion M to adjust a cooling amount of the side surface cooling unit 39.

Thereafter, the discharge module 10 of the three-dimensional fabricating apparatus 1, in step S23, forms the support portion S in the same layer as the model portion M formed in step S21. After step S23, the processing for forming the single layer is terminated, and the processing for remelting the lower layer (step S12) or the processing for determining whether to form the next layer (step S14) is performed.

As described above, since the support portion S is formed after cooling and solidifying the model portion M, the model material and the support material are not mixed, and the support portion S can be easily removed.

### <<Main effects of Embodiment>>

The discharge module 10 (example of discharger) of the three-dimensional fabricating apparatus 1 (example of fabricating apparatus) according to the embodiment discharges the melted filament (example of fabrication material) and forms a fabrication material layer. The heating module 20 (example of heating device) of the three-dimensional fabricating apparatus 1 heats the formed fabrication material layer. The discharge module 10 discharges the melted filament with respect to the heated fabrication material layer to laminate the fabrication material layers and perform fabrication. According to the embodiment, since the materials of the layers are mixed by discharging the filament to the remelted fabrication material layer (lower layer) and laminating the fabrication material layer (upper layer), the strength of the fabrication object in the lamination direction can be enhanced. Furthermore, by the processing for laminating the upper layer, the fabrication object can be fabricated without affecting visibility of the outer shape.

The heating module 20 of the three-dimensional fabricating apparatus 1 selectively heats a predetermined region of the fabrication material layer. As a result, the fabrication can be performed while maintaining the shape of the fabrication object.

The rotation stage RS (example of conveying device) of the three-dimensional fabricating apparatus 1 conveys the heating module 20 so as to heat a predetermined position from different directions. With this operation, the heating module 20 can heat the fabrication material layer following the movement of the discharge module 10.

The three-dimensional fabricating apparatus 1 includes the temperature sensor 104 (example of measuring device) which measures the temperature of the fabrication material layer heated by the heating module 20. The heating module 20 heats the fabrication material layer based on the temperature measured by the temperature sensor 104. With this operation, the three-dimensional fabricating apparatus 1 can appropriately reheat the fabrication material layer according to desired characteristics such as adhesion strength between the layers or the fabrication accuracy.

The heating module 20 may be the laser light source 21 (example of light source irradiating device) which emits laser light. As a result, the heating module 20 can selectively heat the fabrication object without having contact with the fabrication object.

The heating module 20 may be a hot air source (example of air blower) which blows heated air. Accordingly, the heating module 20 can selectively heat the fabrication object without having contact with the fabrication object.

The heating module 20' may be the heating plate 28 or the tap nozzle 28' (example of member) which has contact with and heats the fabrication material layer. Accordingly, the heating module 20' can selectively heat the fabrication object.

The three-dimensional fabricating apparatus 1 may include the plurality of heating modules 20. Accordingly, even when the scanning direction of the discharge module 10 is changed, any one of the heating modules 20 can heat the fabrication object. Therefore, a fabrication time is shortened.

The side surface cooling unit 39 (example of cooler)) of the three-dimensional fabricating apparatus 1 cools the outer peripheral portion of the fabrication object including the fabrication material. Accordingly, the three-dimensional fabricating apparatus 1 can fabricate the fabrication object while maintaining the shape of the fabrication object.

Furthermore, by forming the support portion S after cooling and solidifying the model portion M, the mixture of the model material and the support material can be prevented. With this operation, the support portion S can be easily removed after fabrication while maintaining the strength of the fabrication object.

A plurality of materials having different viscosities is arranged in the filament. Accordingly, the discharge module 10 can discharge the filament so that the material with the lower viscosity is arranged in the outer peripheral portion, under the control by the controller 100.

The assist mechanism 41 (example of supporting member) of the three-dimensional fabricating apparatus 1 supports the formed fabrication material layer. Accordingly, the fabrication can be performed while maintaining the shape of the formed fabrication material layer.

## Claims

1. A fabricating apparatus (1) comprising:
a discharger (10) to discharge a melted fabrication material and form a fabrication material layer including a model portion (M) and a support portion (S); and
a cooler (12) to cool the fabrication material layer.

2. The fabricating apparatus (1) according to claim 1,
wherein the cooler (12) cools the model portion (M) before the support portion (S) is formed.

3. The fabricating apparatus (1) according to claim 1 or 2,
wherein the cooler (12) cools a side surface of the model portion (M).

4. The fabricating apparatus (1) according to any one of claims 1 to 3, further comprising:
a heating device (20) to heat the formed fabrication material layer,
wherein the cooler (12) cools a region heated by the heating device (20) and a fabrication material layer formed on an upper portion of the region.

5. The fabricating apparatus (1) according to claim 4,
wherein the heating device (20) is formed to be capable of arbitrarily changing a heating position and heats a region immediately before a fabrication material is discharged by the discharger (10).

6. The fabricating apparatus (1) according to claim 4 or 5,
wherein the heating device (20) heats a region of the fabrication material layer other than an outer peripheral portion.

7. The fabricating apparatus (1) according to any one of claims 4 to 6,
wherein the heating device (20) is any one of an irradiating device which emits laser light, an air blowing device which blows heated air, and a heating plate (28) which has contact with and heats the fabrication material layer.

8. The fabricating apparatus (1) according to any one of claims 1 to 7, further comprising:
a measuring device (104) to measure a temperature of the fabrication material layer,
wherein the cooler (12) cools the fabrication material layer based on the temperature measured by the measuring device (104).

9. The fabricating apparatus (1) according to any one of claims 1 to 8,
wherein the cooler (12) is a fan.

10. A fabrication method comprising:
discharging a melted fabrication material and forming a model portion;
cooling the model portion; and
discharging a fabrication material and forming a support portion.
